# EUROPÄISCHE PATENTSCHRIFT

(11) **EP 0 611 892 B1**
(45) Veröffentlichungstag und Bekanntmachung des Hinweises auf die Patenterteilung: **11.06.1997**
(21) Anmeldenummer: 94100696.7
(22) Anmeldetag: 19.01.1994
(51) Int. Cl.: F16C 11/04

(54) **Bundzapfengelenk**
Collar pivot joint
Palier d'un tourillon muni d'un collet

(30) Priorität: 17.02.1993 DE 4304775
(43) Veröffentlichungstag der Anmeldung: 24.08.1994
(73) Patentinhaber: TRW Fahrwerksysteme GmbH & Co. KG, 40547 Düsseldorf (DE)
(72) Erfinder: Henkel, Günther, 40468 Düsseldorf (DE); Salm, Helmut, 41470 Neuss (DE)
(74) Vertreter: Stenger, Watzke & Ring Patentanwälte

(56) Entgegenhaltungen:
- DE-A- 3 824 271
- DE-A- 4 104 949
- DE-C- 4 127 092
- GB-A- 1 382 305
- GB-A- 1 475 439
- GB-A- 1 510 740
- US-A- 3 130 991
- US-A- 3 722 931

## Beschreibung

Die Erfindung betrifft ein Bundzapfengelenk mit einem Gehäuse, in dem ein Bundzapfen verdrehbar und begrenzt kippbar gelagert ist, der sich sowohl an seiner zylindrischen Mantelfläche des Bundes als auch an den sich beidseitig über Ringflächen anschließenden zylindrischen Flächen des Zapfens über zwei Lagerbuchsen in der zylindrischen Lagerfläche des Gehäuses abstützt, wobei die zwei Lagerbuchsen, die jeweils einen die halbe axiale Erstreckung des Bundes überdeckenden Ringteil und einen nach innen verdickten Basisteil aufweisen, der den Raum zwischen der jeweiligen zylindrischen Fläche des Zapfens und dem Gehäuse bzw. dem Deckel ausfüllt, axial vorgespannt sind.

Aus der DE 38 24 271 ist ein derartiges Bundzapfengelenk bekannt. Es hat den Nachteil, daß eine definierte Rückstellung des Gelenks nur durch das Einhalten sehr enger Toleranzen bei der Fertigung bewerkstelligt werden kann. Somit hängt die Rückstellkraft dieses bekannten Bundzapfengelenks sehr stark von den einzuhaltenden Toleranzen und damit auch vom Verschleiß des Lagerschalenmaterials ab.

Der Erfindung liegt die Aufgabe zugrunde, ein Bundzapfengelenk der eingangs beschriebenen Art zu schaffen, das bei gleichzeitiger Verringerung der Herstellungskosten wegen des Wegfalls hoher Genauigkeiten eine vorher bestimmbar und vom Verschleiß im wesentlichen unabhängige Rückstellkraft gewährleistet.

Diese Aufgabenstellung wird durch die Merkmale des Anspruchs 1 gelöst.

Bei dem erfindungsgemäß weitergebildeten Bundzapfengelenk wird die axiale Gelenkverspannung und somit auch die Rückstellkraft des Gelenks durch eine entsprechende Dimensionierung der beiden identisch ausgebildeten Lagerbuchsen erreicht. So können beispielsweise die sich axial erstreckenden Ringteile der Lagerbuchsen so ausgebildet werden, daß der Bundzapfen im Bereich des Bundes härter im Gehäuse eingespannt ist als die sich anschließenden zylindrischen Flächen. Ein solchermaßen ausgebildetes Bundzapfengelenk weist eine nur geringe Rückstellkraft auf. Eine hohe Rückstellkraft kann erreicht werden, wenn die Verspannung des Bundzapfens im Gehäuse über die Basisteile der Lagerbuchsen erhöht wird, wodurch die sich an den Bund anschließenden zylindrischen Flächen das beim Auslenken des Bundzapfens auftretende Kippmoment aufnehmen.

Gemäß einem weiteren Merkmal der Erfindung ist an den Basisteilen der Lagerbuchsen eine zu deren Stirnseiten offene Ringnut ausgebildet. Durch die Form, d. h. Breite und Tiefe der Ringnut, läßt sich die Elastizität der Lagerbuchsen und somit die Kippelastizität der Lagerung einstellen.

Bei einer bevorzugten Ausführungsform der Erfindung sind die Ränder der Ringnut untereinander über Stege verbunden. Diese Verbindungsstege bewirken, daß sich die Ränder der Ringnut gegeneinander abstützen und somit eine zu weiche Lagerung verhindert wird. Gemäß einer bevorzugten Ausführungsform verlaufen die Stege tangential, wodurch bei einer Dreh- und Kippbewegung des Bundzapfens die tangential ausgebildeten Stege eine zusätzliche Rückstellkraft bewirken, da sie die Wirkung einer Feder übernehmen.

Zusätzlich wird schließlich vorgeschlagen, die Lagerbuchsen aus Polyamid herzustellen. Die Verwendung von Polyamid hat den Vorteil, daß die Lagerbuchsen kostengünstig als Spritzteile herstellbar sind und daß die Lagerbuchsen Temperaturbelastungen bis 150° C standhalten.

Weitere Einzelheiten und Vorteile der Erfindung ergeben sich aus der nachfolgenden Beschreibung der zugehörigen Zeichnungen, in denen eine bevorzugte Ausführungsform eines erfindungsgemäßen Bundzapfengelenks dargestellt ist. In den Zeichnungen zeigen:
- Fig. 1: eine teilweise längsgeschnittene Explosionszeichnung eines erfindungsgemäßen Bundzapfengelenks,
- Fig. 2: einen teilweisen Längsschnitt durch ein zusammengesetztes Bundzapfengelenk und
- Fig. 3: eine Draufsicht auf eine Lagerbuchse.

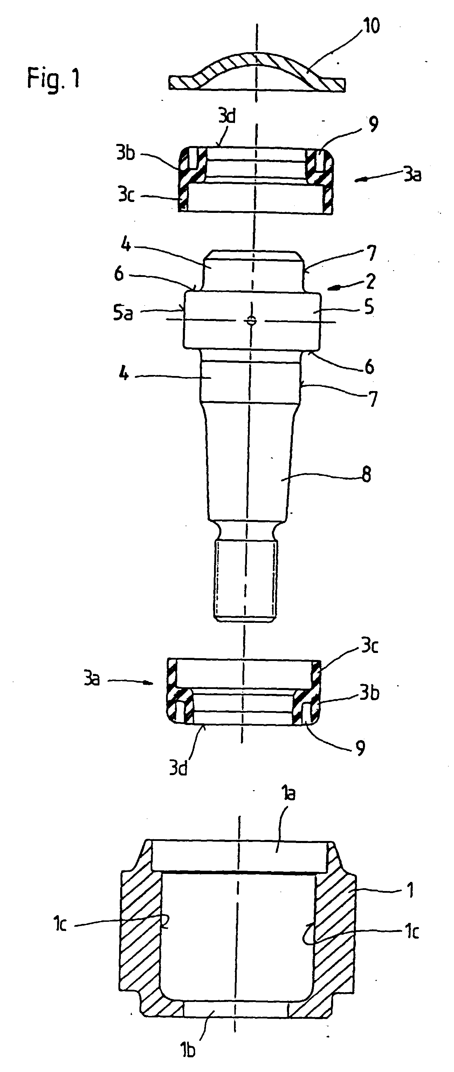

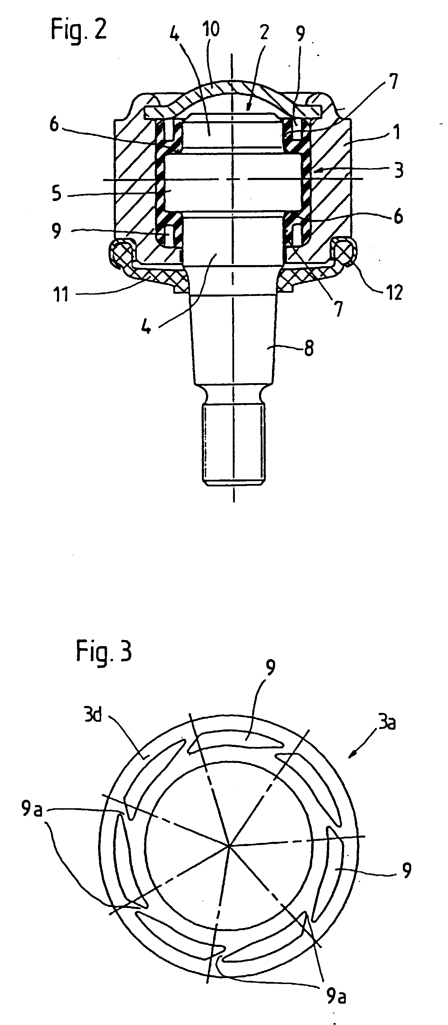

Das in den Abbildungen Fig. 1 und 2 dargestellte Bundzapfengelenk besteht im wesentlichen aus einem Gehäuse 1, in welchem ein Bundzapfen 2 in einer Lagerschale 3 verdreh- und begrenzt kippbar gelagert ist, wobei die Lagerschale 3 zweiteilig ausgebildet aus zwei Lagerbuchsen 3a besteht.

Der in Fig. 1 dargestellten Explosionszeichnung eines Bundzapfengelenks ist der Aufbau des Bundzapfengelenks zu entnehmen. Das Gehäuse 1 weist an der Oberseite eine Montageöffnung 1a und an der Unterseite eine kleinere Öffnung 1b auf. Die Innenseite des Gehäuses 1 ist als zylindrische Lagerfläche 1c für die Lagerbuchsen 3a der Lagerschale 3 ausgebildet.

Der Bundzapfen 2 weist einen auf einem Zapfen 4 ausgebildeten Bund 5 mit einer Mantelfläche 5a auf, der sich an zylindrische Flächen 7 des Zapfens 4 anschließt. Der Zapfen 4 des Bundzapfens 2 weist einseitig einen konusförmigen Zapfenschaft 8 auf. Die beiden, identisch ausgebildeten Lagerbuchsen 3a weisen ein nach innen verdicktes Basisteil 3b auf, an welches sich ein radial erstreckender Ringteil 3c anschließt. In den Basisteilen 3b der Lagerbuchsen 3a sind zu deren Stirnseiten 3d offene Ringnuten 9 ausgebildet, deren Ränder, wie aus Fig. 3 ersichtlich, über Stege 9a untereinander verbunden sind.

Das in Fig. 2 dargestellte zusammengesetzte Bundzapfengelenk zeigt, daß das Gehäuse 1 beidseitig verschlossen ist. Die Montageöffnung 1a ist dabei durch einen Deckel 10 verschlossen, während die untere Öffnung 1b durch einen Dichtungsbalg 11 verschlossen ist, der einerseits über einen Klemmring 12 am Gehäuse 1 festgelegt ist und andererseits fest am Zapfenschaft 8 des Bundzapfens 2 anliegt.

Zur Montage des Bundzapfengelenkes wird zuerst die untere Lagerbuchse 3a durch die Montageöffnung 1a in das Gehäuse 1 eingesetzt. Anschließend wird der Bundzapfen 2 mit dem angeformten Zapfenschaft 8 voran in das Gehäuse 1 so eingesetzt, daß der Zapfenschaft 8 durch die untere Öffnung 1b aus dem Gehäuse 1 herausragt. Der in das Gehäuse 1 eingesetzte Bundzapfen 2 liegt mit den Ringflächen 6 auf dem Basisteil 3b der unteren Lagerbuchse 3a auf, während sich das Ringteil 3c in axialer Richtung in etwa die halbe Höhe der Mantelfläche 5a des Bundes 5 umschließt. Zur Komplettierung der Lagerschale 3 wird nun die zweite Lagerbuchse 3a so auf den Bundzapfen 2 aufgesetzt, daß deren Ringteil 3c die restliche Mantelfläche 5a des Bundes 5 umschließt. Die Basisteile 3b der Lagerbuchsen 3a füllen im eingebauten Zustand den Zwischenraum zwischen den zylindrischen Flächen 7 des Zapfens 4 und dem Gehäuse 1 aus. Zum Abschluß der Montage wird das Gehäuse 1 durch den Deckel 10 verschlossen, wobei der Rand der Montageöffnung 1a des Gehäuses 1 über den Deckel 10 umgebördelt wird.

Der Deckel 10 bewirkt dabei eine Vorspannung der Lagerbuchsen 3a, da dieser auf das Basisteil 3c der oberen Lagerbuchse 3a drückt und damit über die Ringflächen 6 und die untere Lagerbuchse 3a eine axiale Kraft auf den Bundzapfen 2 ausübt.

Die axiale Gelenkverspannung kann durch eine entsprechende Dimensionierung der Lagerbuchsen 3a genau eingestellt werden. Werden beispielsweise ein niedriges Drehmoment und eine hohe Kippelastizität gefordert, werden die sich axial entlang der Mantelfläche 5a des Bundes 5 erstreckenden Ringteile 3c etwas länger als die halbe Höhe der Mantelfläche 5a ausgebildet, so daß beim Zusammenbau des Bundzapfengelenks das Basisteil 3b der oberen Lagerschale 3a nicht direkt auf der oberen Ringfläche 6 aufliegt. Erst durch die Verspannung mittels des Deckels 10 kommen das Basisteil 3d und die Ringfläche 6 in Kontakt, jedoch wird auf diese Weise nur eine geringe axiale Verspannung des Bundzapfengelenks erreicht.

Werden andererseits ein hohes Drehmoment und eine geringe Kippelastizität gefordert, so werden die Ringteile 3c der Lagerbuchse 3a etwas kürzer als die halbe Höhe der Mantelflächen 5a des Bundes 5 ausgebildet. Bei dieser Ausgestaltung liegt das Basisteil 3b der oberen Lagerbuchse 3a auch im unverspannten Zustand schon auf der Ringfläche 6 auf. Durch die axiale Verspannung mittels des Deckels 10 wird der Druck der oberen Lagerbuchse 3a auf den Bundzapfen 2 erhöht und damit die geforderte geringe Kippelastizität erreicht.

Darüber hinaus kann die Kippelastizität durch eine unterschiedliche Ausgestaltung der in den Basisteilen 3b der Lagerbuchsen 3a ausgebildeten Ringnuten 9 erreicht werden. Die Elastizitätswirkung der Nut 9 wird dabei durch die Stege 9a erhöht, welche die Ränder der Nut untereinander verbinden, da diese bestrebt sind, die Ränder der Nut immer wieder auseinander zu drücken. Insbesondere bei der in Fig. 3 dargestellten tangentialen Ausrichtung der Stege 9a bewirken diese eine Rückstellung der Nutränder und haben damit einen großen Einfluß auf die Kippelastizität des Gelenks, da bei einer Dreh- und Kippbewegung des Bundzapfens 2 die tangential angeordneten Stege 9a wie eine Feder wirken und damit eine zusätzliche Rückstellkraft erzeugen.

Ein solchermaßen ausgebildetes Bundzapfengelenk zeichnet sich dadurch aus, daß über eine gezielte Ausgestaltung der Lagerbuchsen 3a eine genau definierte Rückstellkraft und Kippelastizität in dem Bundzapfengelenk eingestellt werden kann.

### Bezugszeichenliste:

- 1: Gehäuse
- 1a: Montageöffnung
- 1b: Öffnung
- 1c: Lagerfläche
- 2: Bundzapfen
- 3: Lagerschale
- 3a: Lagerbuchse
- 3b: Basisteil
- 3c: Ringteil
- 3d: Stirnseite
- 4: Zapfen
- 5: Bund
- 5a: Mantelfläche
- 6: Ringfläche
- 7: Fläche
- 8: Zapfenschaft
- 9: Ringnut
- 9a: Steg
- 10: Deckel
- 11: Dichtungsbalg
- 12: Klemmring

## Patentansprüche

1. Bundzapfengelenk mit einem Gehäuse (1), in dem ein Bundzapfen (2) verdrehbar und begrenzt kippbar gelagert ist, der sich sowohl an seiner zylindrischen Mantelfläche (5a) des Bundes (5) als auch an den sich beiderseitig über Ringflächen (6) anschließenden zylindrischen Flächen (7) des Zapfens (4) über zwei Lagerbuchsen (3a) in der zylindrischen Lagerfläche (1c) des Gehäuses (1) abstützt, wobei die zwei Lagerbuchsen (3a), die jeweils einen die halbe axiale Erstreckung des Bundes (5) überdeckenden Ringteil (3c) und einen nach innen verdickten Basisteil (3b) aufweisen, der den Raum zwischen einer jeweiligen zylindrischen Fläche (7) des Zapfens (4) und dem Gehäuse (1) bzw. dem Deckel (10) ausfüllt, axial vorgespannt sind, dadurch gennzeichnet, daß das Gehäuse (1) durch einen die axiale Vorspannung der Lagerbuchsen (3a) bewirkenden Deckel (10) verschlossen ist und im Basisteil (3b) jeweils eine zu dessen Stirnseite (3d) offene Ringnut (9) ausgebildet ist.

2. Gelenklager nach Anspruch 1, dadurch gekennzeichnet, daß die Ränder der Ringnut (9) untereinander über Stege (9a) verbunden sind.

3. Gelenklager nach Anspruch 2, dadurch gekennzeichnet, daß die Stege (9a) etwa tangential verlaufen.

4. Gelenklager nach mindestens einem der Ansprüche 1 bis 3, dadurch gekennzeichnet, daß die Lagerbuchsen (3a) aus Polyamid hergestellt sind.

## Claims

1. Collar pin joint having a housing (1), in which a collar pin (2) is supported so as to be twistable and tiltable to a limited extent, which collar pin both at the cylindrical lateral surface (5a) of the collar (5) and at the cylindrical surfaces (7) of the pin (4), which via annular faces (6) adjoin the collar at both sides, is supported by means of two bearing bushes (3a) in the cylindrical bearing surface (1c) of the housing (1), two bearing bushes (3a), which each comprise a ring part (3c) owerlapping half of the axial extension of the collar (5) and an inwardly thickened base part (3b) filling the space between a respective cylindrical surface (7) of the pin (4) and the housing (1) or the cover (10), being axially preloaded, characterized in that the housing (1) is closed by means of a cover (10), which effects the axial preloading of the bearing bushes (3a), and formed in the base part (3b) is in each case an annular groove (9) which is open towards the end face (3d) of said base part.

2. Tilting bearing according to claim 1, characterized in that the edges of the annular groove (9) are connected to one another by webs (9a).

3. Tilting bearing according to claim 2, characterized in that the webs (9a) extend substantially tangentially.

4. Tilting bearing according to at least one of claims 1 to 3, characterized in that the bearing bushes (3a) are made of polyamide.

## Revendications

1. Articulation de pivot à collet, comprenant une cage (1) dans laquelle un pivot à collet (2) est monté rotatif et inclinable dans une mesure limitée et prend appui, aussi bien par la surface cylindrique d'enveloppe (5a) de son collet (5) que par les surfaces cylindriques (7) du pivot (4) qui se raccordent de part et d'autre à ce collet par des surfaces annulaires (6), contre les surfaces portantes cylindriques (1c) de la cage (1) par l'intermédiaire de deux coussinets (3a), deux coussinets (3a), qui sont axialement sous précontrainte, comprenant chacun une partie annulaire (3c), qui recouvre la moitié de la longueur axiale du collet (5), ainsi qu'une partie de base (3b) qui est épaissie vers l'intérieur et qui emplit l'espace situé entre l'une des surfaces cylindriques (7) du pivot (4) et la cage (1) ainsi que le couvercle (10), caractérisée en ce que la cage (1) est fermée par un couvercle (10) qui produit la précontrainte axiale des coussinets (3a) et une rainure annulaire (9) qui est réalisée dans chacune des parties de base (3b) étant ouverte sur le côté extrême (3d) de celle-ci.

2. Articulation selon la revendication 1, caractérisée en ce que les bords de la rainure annulaire (9) sont reliés l'un à l'autre par des nervures (9a).

3. Articulation selon la revendication 2, caractérisée en ce que les nervures (9a) sont orientées à peu près tangentiellement.

4. Articulation selon au moins l'une des revendications 1 à 3, caractérisée en ce que les coussinets (3a) sont réalisés en polyamide.
